# EUROPEAN PATENT SPECIFICATION

(11) **EP 4 386 363 B1**
(45) Date of publication and mention of the grant of the patent: **24.12.2025**
(21) Application number: 23165806.3
(22) Date of filing: 31.03.2023
(51) Int. Cl.: G01N 21/88

(54) **APPEARANCE INSPECTION DEVICE AND APPARATUS FOR MANUFACTURING BATTERY CELL**
VORRICHTUNG ZUR UNTERSUCHUNG DES ERSCHEINUNGSBILDES UND VORRICHTUNG ZUR HERSTELLUNG EINER BATTERIEZELLE
DISPOSITIF D'INSPECTION D'ASPECT ET APPAREIL DE FABRICATION D'ÉLÉMENT DE BATTERIE

(30) Priority: 12.12.2022 CN 202223314675 U
(43) Date of publication of application: 19.06.2024
(73) Proprietor: Contemporary Amperex Technology (Hong Kong) Limited, Central, Central And Western District (HK)
(72) Inventor: MA, Lin, Ningde, 352100 (CN); ZHANG, Ming, Ningde, 352100 (CN); HUANG, Yunlong, Ningde, 352100 (CN); CHEN, Man, Ningde, 352100 (CN)
(74) Representative: Holt, Lucy Rose

(56) References cited:
- WO-A1-2018/088423
- CN-A- 115 015 262
- CN-A- 115 112 659
- CN-U- 210 775 273
- JP-A- 2009 042 089
- JP-A- 2010 217 169

## Description

### Technical Field

The present application relates to the technical field of batteries, and in particular, to a method of using an appearance inspection device and an apparatus for manufacturing a battery cell.

### Background Art

Achieving energy conservation and emission reduction is the key to sustainable development of the automotive industry. Electric vehicles have become an important part of sustainable development of the automotive industry due to their advantages in energy conservation and environmental protection. For electric vehicles, battery technology is an important factor in their development.

In the development of battery technology, how to improve the manufacturing efficiency of batteries is an urgent technical problem to be solved in battery technology.
JP2009042089A relates to a substrate visual inspection apparatus that determines suitability of a state and a solder surface state. CN115112659A relates to a detection device and a detection method for appearance surface defects. WO2018088423A1 relates to an optical inspection device. JP2010217169A relates to a printed circuit board visual inspection system and method. CN210775273U relates to a battery image shooting system. CN115015262A relates to an intelligent detection device for the quality of lithium battery products and a detection system thereof.

### Summary

The present application provides a method of using an appearance inspection device to inspect a battery cell, which can improve the versatility of the appearance inspection device, thereby improving the battery manufacturing efficiency.

Aspects of the invention are set out in the claims. In a first aspect, there is provided a method of using an appearance inspection device to inspect a battery cell. According to a first example outside of the scope of the present application there is provided an appearance inspection device for inspecting a battery cell, the appearance inspection device comprising: a first camera assembly comprising a first camera and a first light source, the first light source being configured to provide illumination to the first camera, and the first camera being configured to acquire images of a first surface of the battery cell when the first surface is covered by an insulating layer; and a second camera assembly comprising a second camera and a second light source, the second light source being configured to provide illumination to the second camera, and the second camera being configured to acquire images of the first surface when at least a partial region of the first surface is not covered by the insulating layer.

Depending on different types of battery cells, the battery cells are covered by insulating layers in different manners. Some battery cells each may have a bottom face and a side face covered by insulating layers (a battery cell having a bottom face covered by an insulating layer may be referred to as a battery cell having a fully-coated bottom face, and a battery cell having a side face covered by an insulating layer may be referred to as a battery cell having a fully-coated side face), while some battery cells each may be windowed in a bottom face or a side face, in other words, at least a part of the bottom face or the side face may not be covered by an insulating layer (a battery cell having at least a part of a bottom face not covered by an insulating layer may be referred to as a battery cell having a windowed bottom face, and a battery cell having at least a part of a side face not covered by an insulating layer may be referred to as a battery cell having a windowed side face), that is, a part of a metal housing (aluminum housing) is exposed. During battery cell manufacturing, a production line may switch a type (switching of a type of a battery cell conveyed, such as switching from a battery cell having a fully-coated bottom or side face to a battery cell having a windowed bottom or side face), but an existing inspection scheme can only be used to effectively inspect appearance defects of a fully-coated battery cell, and a windowed battery cell cannot be inspected due to the problem of light reflection of the aluminum housing, which leads to low efficiency of appearance inspection of battery cells in the production line. Therefore, in the above solution, the first camera assembly and the second camera assembly are both provided such that when the production line conveys a battery cell having a first surface covered by an insulating layer (a battery cell having a fully-coated first surface), the first camera assembly is used to effectively inspect appearance defects of the first surface of the battery cell; and when the production line conveys a battery cell having at least a partial region of a first surface not covered by an insulating layer (a battery cell having a windowed first surface), the second camera assembly is used to implement effective appearance defect inspection on the first surface, in order to overcome the defect that the first camera assembly cannot image defects such as burrs and pits due to the light reflection of the aluminum housing. Therefore, operating states of the first camera assembly and the second camera assembly are switched to correspondingly inspect different types of battery cells and implement type switching in the production line, improving the versatility of the appearance inspection device and therefore the battery manufacturing efficiency.

According to some embodiments of the present application, the first camera and the second camera are both line scan cameras.

In the above solution, the first camera and the second camera are both line scan cameras, such that the efficiency of acquiring images of the first surface can be improved, and then the appearance inspection device has a higher inspection efficiency.

According to some examples, the first camera is a 2D line scan camera; and the second camera is a 2.5D line scan camera.

In the above solution, the second camera is a 2.5D line scan camera, an illumination angle is changed at a high speed by means of the second light source while shooting is repeatedly performed for synthesizing a plurality of obtained images and finally acquiring an image of the first surface when at least a partial region is not covered by an insulating layer, so as to meet requirements for inspection of different defects, and overcome the problem that the 2D camera cannot effectively acquire the images of the first surface due to the light reflection of the aluminum housing and thus cannot effectively inspect the appearance defects of the first surface. The first camera is a 2D camera, which can overcome the defect that the 2.5D camera cannot effectively distinguish defects peculiar to an insulating layer from bubbles in imaging, ensure the accuracy of the appearance inspection of the first surface covered by the insulating layer, improve the versatility of the appearance inspection device, and improve the efficiency of the appearance inspection of the battery cell.

According to some embodiments of the present application, the appearance inspection device further comprises a first adjusting mechanism connected to the first camera and configured to adjust a distance between the first camera and the first surface.

In the above solution, the type switching in the production line may involve a change in the specifications and sizes of battery cells. Therefore, the first adjusting mechanism is provided to adjust a distance between the first camera and a surface of each battery cell, so as to adapt to battery cells with different sizes and specifications. For example, when the size of a battery cell changes in a height direction of the battery cell, the first adjusting mechanism may adjust a distance between a camera and a first surface in the height direction of the battery cell to ensure that the visual range of the first camera can adapt to the battery cell, thereby improving the versatility of the appearance inspection device and the effectiveness and efficiency of appearance inspection.

According to some embodiments of the present application, the appearance inspection device further comprises a second adjusting mechanism connected to the first light source and configured to adjust a distance between the first light source and the first surface.

In the above solution, the type switching in the production line may involve a change in the specifications and sizes of battery cells. Therefore, the second adjusting mechanism is provided to adjust a distance between the first light source and a surface of each battery cell, so as to provide illumination in different ranges to the first camera to adapt to battery cells with different sizes and specifications, thereby improving the versatility of the appearance inspection device and the effectiveness and efficiency of appearance inspection of the battery cells.

According to some embodiments of the present application, the appearance inspection device further comprises a third adjusting mechanism connected to the second camera and configured to adjust an angle of the second camera.

In the above solution, the type switching in the production line may involve a change in the specifications and sizes of battery cells. Therefore, the third adjusting mechanism is provided to adjust the angle of the second camera, such that a shooting line of sight of the second camera adapts to battery cells with different sizes and specifications, and it is ensured that the shooting line of sight of the second camera and illumination rays of the second light source converge on the first surface of the battery cell, so as to effectively acquire the images of the windowed first surface, thereby improving the versatility of the appearance inspection device and therefore the effectiveness and efficiency of appearance inspection.

According to some embodiments of the present application, the appearance inspection device further comprises a fourth adjusting mechanism connected to the second light source and configured to adjust an angle of the second light source.

In the above solution, the type switching in the production line may involve a change in the specifications and sizes of battery cells. Therefore, the fourth adjusting mechanism is provided to adjust the angle of the second light source, such that illumination rays of the second light source adapt to battery cells with different sizes and specifications, and it is ensured that the shooting line of sight of the second camera and illumination rays of the second light source converge on the first surface of the battery cell, so as to effectively acquire the images of the windowed first surface, thereby improving the versatility of the appearance inspection device and therefore the effectiveness and efficiency of appearance inspection.

According to some embodiments of the present application, the appearance inspection device further comprises: a fixing support on which the first camera assembly and the second camera assembly are arranged.

In the above solution, the first camera assembly and the second camera assembly are integrated by providing the fixing support, so that the appearance inspection device has the advantages of compact structure and small occupied area.

According to some embodiments of the present application, the appearance inspection device further comprises a fifth adjusting mechanism connected to the fixing support and configured to adjust a distance between the fixing support and the first surface.

In the above solution, the type switching in the production line may involve a change in the specifications and sizes of battery cells. Therefore, the fifth adjusting mechanism is provided to adjust a distance between the first surface and each of the first camera assembly and the second camera assembly, so as to adapt to battery cells with different sizes and specifications, thereby improving the versatility of the appearance inspection device.

According to some embodiments of the present application, when the first surface is a bottom face of the battery cell, the first camera and the second camera have a field of view L1, which satisfies 120 mm ≤ L1 ≤ 305 mm.

In the above solution, the field of view of the camera corresponding to a bottom face of some battery cells is within a size range of 120 mm to 305 mm. Therefore, when the first surface is the bottom face of the battery cell, the first camera and the second camera having the field of view L1, which satisfies 120 mm ≤ L1 ≤ 305 mm, may be used to meet the compatibility range of the battery cells, thereby improving the versatility of the appearance inspection device.

According to some embodiments of the present application, when the first surface is a side face of the battery cell, the first camera and the second camera have a field of view L2, which satisfies 70 mm ≤ L2 ≤ 120 mm.

In the above solution, the field of view of the camera corresponding to a side face of some battery cells is within a size range of 70 mm to 120 mm. Therefore, when the first surface is the side face of the battery cell, the first camera and the second camera having the field of view L2, which satisfies 70 mm ≤ L2 ≤ 120 mm, may be used to meet the compatibility range of the battery cells, thereby improving the versatility of the appearance inspection device.

According to some embodiments of the present application, the appearance inspection device further comprises: a third camera assembly comprising a third camera and a third light source, the third light source being configured to provide illumination to the third camera, and the third camera being configured to acquire images of a second surface of the battery cell when the second surface is covered by an insulating layer; and a fourth camera assembly comprising a fourth camera and a fourth light source, the fourth light source being configured to provide illumination to the fourth camera, and the fourth camera being configured to acquire images of the second surface when at least a partial region of the second surface is not covered by the insulating layer.

In the above solution, the third camera assembly and the fourth camera assembly are both provided such that when the production line conveys a battery cell having a second surface covered by an insulating layer (a battery cell having a fully-coated second surface), the third camera assembly is used to effectively inspect appearance defects of the second surface of the battery cell; and when the production line conveys a battery cell having at least a partial region of a second surface not covered by an insulating layer (a battery cell having a windowed second surface), the fourth camera assembly is used implement effective appearance defect inspection on the second surface, in order to overcome the defect that the third camera assembly cannot image defects such as burrs and pits due to the light reflection of the aluminum housing. Therefore, operating states of the third camera assembly and the fourth camera assembly are switched to respectively inspect different types of battery cells and implement type switching in the production line, thereby improving the versatility of the appearance inspection device and therefore the battery manufacturing efficiency.

According to some embodiments of the present application, one of the first surface and the second surface is a side face of the battery cell, and the other is a bottom face of the battery cell.

In the above solution, the appearance inspection device comprises the first camera assembly, the second camera assembly, the third camera assembly, and the fourth camera assembly, such that the appearance of the bottom face and the side face of the battery cell can be inspected at the same time, so as to adapt to different cases that the bottom face is fully-coated or windowed and the side face is fully-coated or windowed, thereby improving the versatility of the appearance inspection device and the efficiency of appearance inspection of the battery cell.

An example outside of the scope of the invention provides an apparatus for manufacturing a battery cell, the apparatus comprising an appearance inspection device according to the first example.

The above description is only an overview of the technical solutions of the present application. In order to more clearly understand the technical means of the present application to implement the same according to the content of the description, and in order to make the above and other objectives, features and advantages of the present application more obvious and understandable, specific implementations of the present application are exemplarily described below.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic diagram of an appearance inspection device;
FIG. 2 is a schematic perspective view of an appearance inspection device;
FIG. 3 is an axonometric view of an appearance inspection device;
FIG. 4 is a schematic diagram of a battery cell having a first surface which is a bottom face;
FIG. 5 is a schematic diagram of an appearance inspection device;
FIG. 6 is a schematic perspective view of an appearance inspection device;
FIG. 7 is an axonometric view of an appearance inspection device;
FIG. 8 is a schematic diagram of a battery cell having a first surface which is a side face; and
FIG. 9 is a flowchart of an appearance inspection method according to the present application.

List of reference signs: 10 - First camera assembly; 11 - First camera; 12 - First light source;
20 - Second camera assembly; 21 - Second camera; 22 - Second light source;
30 - First adjusting mechanism; 31 - Second adjusting mechanism; 32 - Third adjusting mechanism; 33 - Fourth adjusting mechanism; 34 - Fixing support; 35 - Fifth adjusting mechanism;
40 - Battery cell; 41 - First surface;
100 - Appearance inspection method;
x - First direction; y - Second direction; a - First track; b - Second track; d - Conveying direction.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Obviously, the embodiments described are some of, rather than all of, the embodiments of the present application. Based on the embodiments of the present application, all other embodiments obtained by those of ordinary skill in the art without any creative effort fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: A exists, both A and B exist, and B exists. In addition, the character "/" in the present application generally indicates that the associated objects before and after the character are in a relationship of "or".

"A plurality of" appearing in the present application means two or more (including two).

A battery mentioned in the present application refers to a single physical module including one or more battery cells to provide a higher voltage and capacity.

In order to ensure the insulation of a battery cell, an insulating layer may be arranged on an outer surface of the battery cell. For example, the battery cell may be covered by an insulating film or coated with an insulating coating.

Design factors in many aspects need to be simultaneously considered for the development of the battery technology, such as energy density, discharge capacity, charge-discharge rate, and other performance parameters. In addition, the battery manufacturing efficiency needs to be taken into account.

The appearance defect inspection of battery cells is one of the factors that affect the battery manufacturing efficiency. Depending on the coverage of the insulating layer on a surface, battery cells are mainly grouped into fully-coated battery cells and windowed battery cells. A fully-coated battery cell means a battery cell having a bottom face and a side face both completely covered by an insulating layer, and a windowed battery cell means a battery cell having at least a partial region of a bottom face or a side face not covered by an insulating layer, to expose a metal housing (such as an aluminum housing) of the battery cell. The inventors have found that an existing device for inspecting surface defects of a battery cell does not take into account the difference between a windowed battery cell and a fully-coated battery cell, which leads to the poor versatility of the inspection device and affects the battery manufacturing efficiency.

In view of this, in order to improve the versatility of an appearance inspection device of the battery cell and the battery manufacturing efficiency, through in-depth research, the inventors have designed an appearance inspection device for the appearance inspection of the battery cell. The appearance inspection device comprises both a first camera assembly and a second camera assembly. For different materials to be inspected, the first camera assembly and/or the second camera assembly are/is selected to inspect the appearance of the battery cell (for example, when a battery cell to be inspected is a fully-coated battery cell, the first camera assembly may acquire images of a surface to be inspected of the battery cell; and when a battery cell to be inspected is a windowed battery cell, the second camera assembly may acquire images of a surface to be inspected of the battery cell), so as to adapt to the type switching between the fully-coated battery cell and the windowed battery cell, thereby improving the versatility of the appearance inspection device and therefore the battery manufacturing efficiency.

The appearance inspection device outside of the scope of the present application is used for, including but not limited to, appearance inspection of a battery cell, and may also be used for appearance inspection of an object that has a surface covered by an insulating layer or has a surface not covered by an insulating layer so as to expose a metal housing. The appearance inspection device is applied to, including but not limited to, an apparatus for manufacturing a battery cell or another object manufacturing apparatus having a surface covered by an insulating layer.

According to some examples, an appearance inspection device is provided.

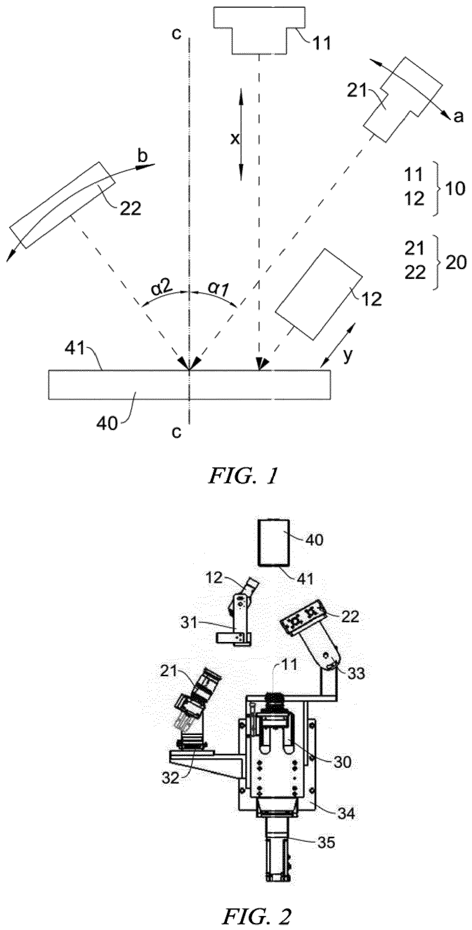

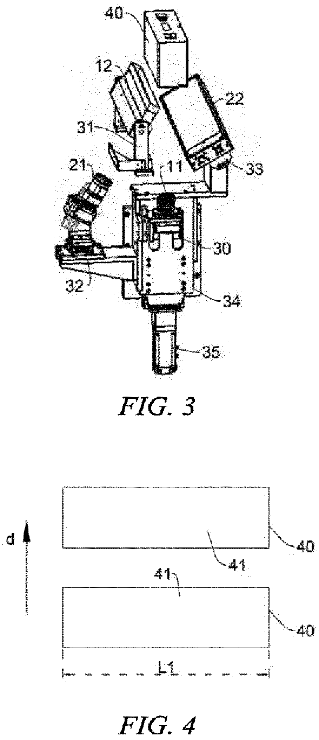

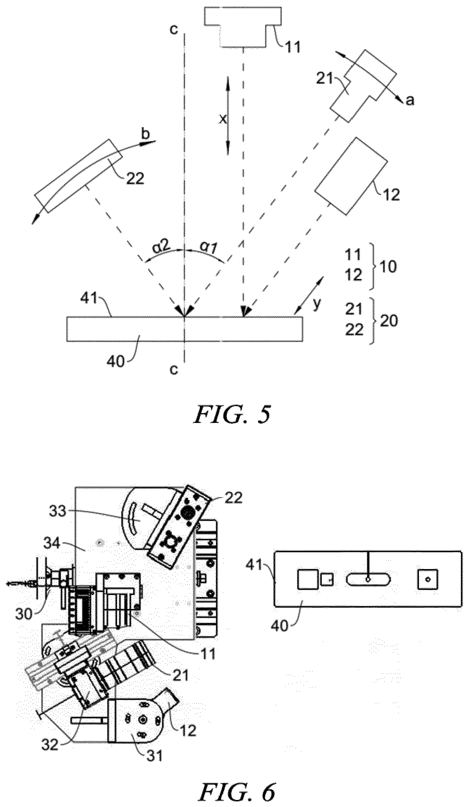

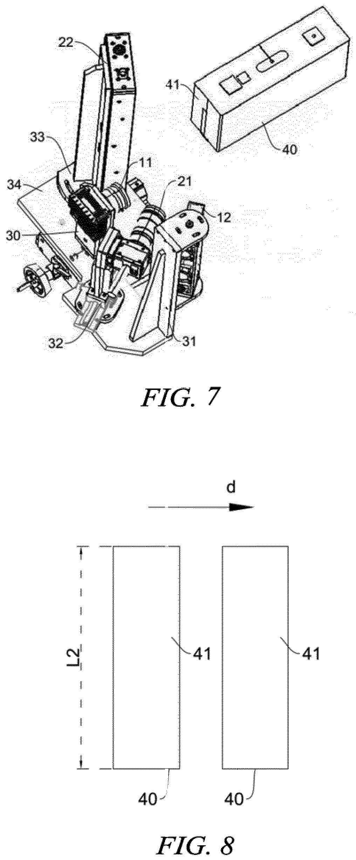

Referring to FIGS. 1 to 4, FIG. 1 is a schematic diagram of an appearance inspection device, FIG. 2 is a schematic perspective view of an appearance inspection device , FIG. 3 is an axonometric view of an appearance inspection device, and FIG. 4 is a schematic diagram of a battery cell 40 having a first surface 41 which is a bottom face in some embodiments of the present application. In FIGS. 1 to 4, the first surface 41 inspected by the appearance inspection device may be the bottom face of the battery cell 40. Alternatively, reference may also be made to FIGS. 5 to 8. FIG. 5 is a schematic diagram of an appearance inspection device in some other embodiments of the present application, FIG. 6 is a schematic perspective view of an appearance inspection device in some other embodiments of the present application, FIG. 7 is an axonometric view of an appearance inspection device in some other embodiments of the present application, and FIG. 8 is a schematic diagram of a battery cell 40 having a first surface 41 which is a side face in some embodiments of the present application. In FIGS. 5 to 8, the first surface 41 inspected by the appearance inspection device may be the side face of the battery cell 40.

The appearance inspection device is configured to inspect the battery cell 40, and comprises a first camera assembly 10 and a second camera assembly 20. The first camera assembly 10 comprises a first camera 11 and a first light source 12. The first light source 12 is configured to provide illumination to the first camera 11, and the first camera 11 is configured to acquire images of a first surface 41 of the battery cell 40 when the first surface 41 is covered by an insulating layer. The second camera assembly 20 comprises a second camera 21 and a second light source 22. The second light source 22 is configured to provide illumination to the second camera 21, and the second camera 21 is configured to acquire images of the first surface 41 when at least a partial region of the first surface 41 is not covered by the insulating layer.

The first surface 41 of the battery cell 40 may be a side face, a large face, a top face or a bottom face of the battery cell 40. The side face of the battery cell 40 may mean a surface with a smaller area in a circumferential direction of the battery cell 40. The large face of the battery cell 40 may mean a surface with a larger area in the circumferential direction of the battery cell 40. The top face of the battery cell 40 may be a surface provided with an electrode terminal (which is a component of the battery cell 40 for external charging and discharging, such as a terminal post). The bottom face of the battery cell 40 is a surface of the battery cell 40 opposite to the top surface. The bottom face and the top face may be oppositely arranged in a height direction of the battery cell 40.

In some embodiments of the present application, a case in which the first surface 41 is a side face or a bottom face of the battery cell 40 is used for description.

The first surface 41 of the battery cell 40 being covered by an insulating layer may mean that the first surface 41 of the battery cell 40 is completely or partially covered by the insulating layer. The first camera 11 is an apparatus that can acquire images of the first surface 41 completely or partially covered by the insulating layer. The first camera 11 has a good imaging effect on the insulating layer, so that it is possible to inspect whether the insulating layer has defects such as cracks, wrinkles or bubbles. The first light source 12 is a component that can provide illumination to the first camera 11 to implement imaging of the first camera 11.

At least a partial region of the first surface 41 being not covered by an insulating layer may mean that the first surface 41 of the battery cell 40 is windowed, in other words, the insulating layer does not completely cover the first surface 41, and the region of the first surface 41 that is not covered by the insulating layer exposes the metal housing (such as the aluminum housing) of the battery cell 40. The second camera 21 is an apparatus that can acquire images of the first surface 41 having at least a partial region not covered by an insulating layer. The second camera 21 has a good imaging effect on the metal housing, so that it is possible to inspect whether the metal housing has defects such as burrs, pits or impurity particles. The second light source 22 is a component that can provide illumination to the second camera 21 to implement imaging of the second camera 21.

Depending on different types of battery cells, the battery cells are covered by insulating layers in different manners. Some battery cells 40 each may have a bottom face and a side face covered by insulating layers (a battery cell having a bottom face covered by an insulating layer may be referred to as a battery cell having a fully-coated bottom face, and a battery cell having a side face covered by an insulating layer may be referred to as a battery cell having a fully-coated side face), while some battery cells 40 each may be windowed in a bottom face or a side face, in other words, at least a part of the bottom face or the side face may not be covered by an insulating layer (a battery cell having at least a part of a bottom face not covered by an insulating layer may be referred to as a battery cell 40 having a windowed bottom face, and a battery cell having at least a part of a side face not covered by an insulating layer may be referred to as a battery cell having a windowed side face), that is, a part of a metal housing (aluminum housing) is exposed. During battery cell manufacturing, a production line may switch a type (switching of a type of a battery cell in the production line, such as switching from a battery cell having a fully-coated bottom or side face to a battery cell having a windowed bottom or side face), but an existing inspection scheme can only be used to effectively inspect appearance defects of a fully-coated battery cell, and a windowed battery cell cannot be inspected due to the problem of light reflection of the aluminum housing. As a result, an existing appearance inspection device has low versatility, which leads to low efficiency of appearance inspection of battery cells in the production line. Therefore, in the above solution, the first camera assembly 10 and the second camera assembly 20 are both provided such that when the production line conveys a battery cell 40 having a first surface 41 covered by an insulating layer (a battery cell 40 having a fully-coated first surface 41), the first camera assembly 10 is used to effectively inspect appearance defects of the first surface 41 of the battery cell 40; and when the production line conveys a battery cell 40 having at least a partial region of a first surface 41 not covered by an insulating layer (a battery cell 40 having a windowed first surface 41), the second camera assembly 20 is used to implement effective appearance defect inspection on the first surface 41, in order to overcome the defect that the first camera assembly 10 cannot image defects such as burrs and pits due to the light reflection of the aluminum housing. Therefore, operating states of the first camera assembly 10 and the second camera assembly 20 are switched to correspondingly inspect different types of battery cells 40 and implement type switching in the production line, thereby improving the versatility of the appearance inspection device and the efficiency of appearance inspection of the battery cells 40 and therefore the battery manufacturing efficiency.

According to some embodiments of the present application, the first camera 11 and the second camera 21 are both line scan cameras.

The line scan camera is a special camera for industrial inspection, which has the technical advantages of high speed and high accuracy. The line scan camera can acquire real-time images of inspected objects running continuously, and send the acquired images by means of an image acquisition card to a computer for image processing.

In some embodiments, with the line scan cameras, the images of the first surface 41 can be acquired in real time during conveying of the battery cell 40, so as to improve the efficiency of appearance inspection of the battery cell 40.

In the above solution, the first camera 11 and the second camera 21 are both line scan cameras, such that the efficiency of acquiring the images of the first surface 41 can be improved, and high-speed inspection requirements are met, so that the appearance inspection device has a higher inspection efficiency.

According to some embodiments of the present application, the first camera 11 is a 2D line scan camera. The second camera 21 is a 2.5D line scan camera.

In some embodiments, the first camera 11 may be a 2D line scan camera, which can obtain plane image information of the first surface 41 and implement the image acquisition of the insulating layer. In some embodiments, the second camera 21 may be a 2.5D line scan camera. The 2.5D camera is an apparatus that controls the light source to illuminate from different angles, obtains shadow images generated by concave-convex information of the images, and finally synthesizes and calculates an image with 3D information.

In the above solution, the second camera 21 is a 2.5D line scan camera, an illumination angle is changed at a high speed by means of the second light source 22 while shooting is repeatedly performed for synthesizing a plurality of obtained images and finally acquiring an image of the first surface 41 when at least a partial region is not covered by an insulating layer, so as to meet requirements for inspection of different defects, and overcome the problem that the 2D camera cannot effectively acquire the images of the first surface 41 due to the light reflection of the aluminum housing and thus cannot effectively inspect the appearance defects of the first surface 41. The first camera 11 is a 2D camera, which can overcome the defect that the 2.5D camera cannot effectively distinguish defects peculiar to an insulating layer from bubbles in imaging, ensure the accuracy of the appearance inspection of the first surface 41 covered by the insulating layer, improve the versatility of the appearance inspection device, and improve the efficiency of the appearance inspection of the battery cell 40.

According to some embodiments of the present application, reference is made to FIGS. 1, 2 and 3, or to FIGS. 5, 6 and 7. The appearance inspection device further comprises a first adjusting mechanism 30. The first adjusting mechanism 30 is connected to the first camera 11, and is configured to adjust a distance between the first camera 11 and the first surface 41.

The first adjusting mechanism 30 may be an apparatus that can change a position of the first camera 11 to adjust the distance between the first camera 11 and the first surface 41.

In some embodiments, the first adjusting mechanism 30 can adjust the position of the first camera 11 in a first direction x. The first direction x may be perpendicular to the first surface 41. In these embodiments, the first adjusting mechanism 30 may be a linear adjusting mechanism, which may include, but is not limited to, an apparatus that can output a linear motion, such as a linear motor and an air cylinder.

In the above solution, the type switching in the production line may involve a change in the specifications and sizes of battery cells 40. Therefore, the first adjusting mechanism 30 is provided to adjust a distance between the first camera 11 and a first surface 41 of each battery cell 40, so as to adapt to battery cells 40 with different sizes and specifications. For example, when the size of a battery cell 40 changes in a height direction of the battery cell 40, the first adjusting mechanism 30 may adjust a distance between a camera and a first surface 41 in the height direction of the battery cell 40 to ensure that the visual range of the first camera 11 can adapt to the battery cell 40, thereby improving the versatility of the appearance inspection device and the effectiveness and efficiency of appearance inspection.

According to some embodiments of the present application, reference is made to FIGS. 1, 2 and 3, or to FIGS. 5, 6 and 7. The appearance inspection device further comprises a second adjusting mechanism 31. The second adjusting mechanism 31 is connected to the first light source 12, and is configured to adjust a distance between the first light source 12 and the first surface 41.

The second adjusting mechanism 31 may be an apparatus that can change a position of the first light source 12 to adjust the distance between the first light source 12 and the first surface 41.

In some embodiments, the second adjusting mechanism 31 can adjust a position of the first light source 12 in a second direction y. In some embodiments, the second direction y may be a direction in which light is emitted from the first light source 12. In some other embodiments, the second direction y may be perpendicular to the first surface 41. In these embodiments, the second adjusting mechanism 31 may be a linear adjusting mechanism, which may include, but is not limited to, an apparatus that can output a linear motion, such as a linear motor and an air cylinder.

In the above solution, the type switching in the production line may involve a change in the specifications and sizes of battery cells 40. Therefore, the second adjusting mechanism 31 is provided to adjust a distance between the first light source 12 and a first surface 41 of each battery cell 40, so as to provide illumination in different ranges to the first camera 11 to adapt to battery cells 40 with different sizes and specifications, thereby improving the versatility of the appearance inspection device and the effectiveness and efficiency of appearance inspection of the battery cells 40.

According to some embodiments of the present application, reference is made to FIGS. 1, 2 and 3, or to FIGS. 5, 6 and 7. The appearance inspection device further comprises a third adjusting mechanism 32. The third adjusting mechanism 32 is connected to the second camera 21, and is configured to adjust an angle of the second camera 21.

The third adjusting mechanism 32 may be an apparatus that can change a position of the second camera 21 to adjust the angle of the second camera 21.

Referring to FIG. 1 or 5, the angle of the second camera 21 may mean an angle α1 between a shooting line of sight of the second camera 21 and a normal of the first surface 41 (the normal of the first surface 41 is perpendicular to the first surface 41). In FIGS. 1 and 5, the normal is marked with a reference sign c-c.

In some embodiments, the third adjusting mechanism 32 can adjust the position of the second camera 21 on a first track a, and the first track a may be arc-shaped. The third adjusting mechanism 32 changes the position of the second camera 21 on the first track a, so that the angle between the shooting line of sight of the second camera 21 and the normal of the first surface 41 can be adjusted. In these embodiments, the third adjusting mechanism 32 may be an apparatus that drives the second camera 21 to move along the first track a and can output an arc-shaped motion. For example, the third adjusting mechanism 32 may comprise a motor, a slide rail corresponding to the first track a, and a swing arm. The motor is hinged to the second camera 21 by means of the swing arm, and the second camera 21 is in a sliding fit with the slide rail. When the motor operates, the second camera 21 can move along the slide rail. Alternatively, in some embodiments, the second camera 21 may be mounted by means of a rotating member, and the angle of the second camera 21 is adjusted by rotating the rotating member.

In the above solution, the type switching in the production line may involve a change in the specifications and sizes of battery cells 40. Therefore, the third adjusting mechanism 32 is provided to adjust the angle of the second camera 21, such that a shooting line of sight of the second camera 21 adapts to battery cells 40 with different sizes and specifications, and it is ensured that the shooting line of sight of the second camera 21 and illumination rays of the second light source 22 converge on the first surface 41 of the battery cell 40, so as to effectively acquire the images of the windowed first surface 41, thereby improving the versatility of the appearance inspection device and therefore the effectiveness and efficiency of appearance inspection.

According to some embodiments of the present application, reference is made to FIGS. 1, 2 and 3, or to FIGS. 5, 6 and 7. The appearance inspection device further comprises a fourth adjusting mechanism 33. The fourth adjusting mechanism 33 is connected to the second light source 22, and is configured to adjust an angle of the second light source 22.

The fourth adjusting mechanism 33 may be an apparatus that can change a position of the second light source 22 to adjust the angle of the second light source 22.

Referring to FIG. 1 or 5, the angle of the second light source 22 may mean an angle α2 between the illumination rays of the second light source 22 and a normal of the first surface 41 (the normal of the first surface 41 is perpendicular to the first surface 41).

In some embodiments, the fourth adjusting mechanism 33 can adjust the position of the second light source 22 on a second track b, and the second track b may be arc-shaped. The fourth adjusting mechanism 33 changes the position of the second light source 22 on the second track b, so that the angle between the illumination rays of the second light source 22 and the normal of the first surface 41 can be adjusted. In these embodiments, the fourth adjusting mechanism 33 may be an apparatus that drives the second light source 22 to move along the second track b and can output an arc-shaped motion. For example, the fourth adjusting mechanism 33 may comprise a motor, a slide rail corresponding to the second track b, and a swing arm. The motor is hinged to the second light source 22 by means of the swing arm, and the second light source 22 is in a sliding fit with the slide rail. When the motor operates, the second light source 22 can move along the slide rail. Alternatively, in some embodiments, the second light source 22 may be mounted by means of a rotating member, and the angle of the second light source 22 is adjusted by rotating the rotating member.

In the above solution, the type switching in the production line may involve a change in the specifications and sizes of battery cells 40. Therefore, the fourth adjusting mechanism 33 is provided to adjust the angle of the second light source 22, such that illumination rays of the second light source 22 adapt to battery cells 40 with different sizes and specifications, and it is ensured that the shooting line of sight of the second camera 21 and illumination rays of the second light source 22 converge on the first surface 41 of the battery cell 40, so as to effectively acquire the images of the windowed first surface 41, thereby improving the versatility of the appearance inspection device and therefore the effectiveness and efficiency of appearance inspection.

Referring to FIG. 1 or 5, in some embodiments, when the first camera 11 is a 2D camera and the second camera 21 is a 2.5D camera, in order to ensure effective imaging of the second camera 21, the second light source 22 and the second camera 21 are located on two sides of the normal perpendicular to the first surface 41, and have an equal angle (α1 = α2). Since requirements of the 2D camera for the light source are lower than those of the 2.5D camera, the first light source 12 may be placed on the same side as the second camera 21 in order to make more reasonable use of the space on the one hand, and not to block the field of view of the camera on the other hand.

According to some embodiments of the present application, referring to FIGS. 2 and 3, or FIGS. 6 and 7, the appearance inspection device further comprises a fixing support 34, and the first camera assembly 10 and the second camera assembly 20 are arranged on the fixing support 34. It should be noted that the fixing support 34 is not completely shown in FIGS. 2 and 3.

The fixing support 34 may be a component that supports both the first camera assembly 10 and the second camera assembly 20.

In the above solution, the first camera assembly 10 and the second camera assembly 20 are integrated by providing the fixing support 34, so that the appearance inspection device has the advantages of compact structure and small occupied area. According to some embodiments of the present application, the appearance inspection device further comprises a fifth adjusting mechanism 35. The fifth adjusting mechanism 35 is connected to the fixing support 34, and is configured to adjust a distance between the fixing support 34 and the first surface 41.

According to some embodiments of the present application, the appearance inspection device further comprises a fifth adjusting mechanism 35. The fifth adjusting mechanism 35 is connected to the fixing support 34, and is configured to adjust a distance between the fixing support 34 and the first surface 41.

The fifth adjusting mechanism 35 may be an apparatus that can change a position of the fixing support 34 to adjust a distance between the first surface 41 of the battery cell 40 and each of the first camera assembly 10 and the second camera assembly 20 on the fixing support 34.

In some embodiments, the fifth adjusting mechanism 35 can adjust the position of the fixing support 34 in a first direction x. The first direction x may be perpendicular to the first surface 41. In these embodiments, the fifth adjusting mechanism 35 may be a linear adjusting mechanism, which may include, but is not limited to, an apparatus that can output a linear motion, such as a linear motor and an air cylinder.

In the above solution, the type switching in the production line may involve a change in the specifications and sizes of battery cells 40. Therefore, the fifth adjusting mechanism 35 is provided to adjust a distance between the first surface 41 and each of the first camera assembly 10 and the second camera assembly 20, so as to adapt to battery cells 40 with different sizes and specifications, thereby improving the versatility of the appearance inspection device.

According to some embodiments of the present application, referring to FIG. 4, when the first surface 41 is a bottom face of the battery cell 40, the first camera 11 and the second camera 21 have a field of view L1, which satisfies 120 mm ≤ L1 ≤ 305 mm.

Referring to FIG. 4, FIG. 4 shows the field of view L1 of the first camera 11 and the second camera 21, and L1 may correspond to a length of the bottom face. FIG. 4 also shows a conveying direction d (the conveying direction d may be a width direction of the bottom face) of battery cells 40. When the field of view L1 of the first camera 11 and the second camera 21 is 120 mm to 305 mm, the current compatibility range of the bottom face of the battery cells 40 can be met, and when the first camera 11 and the second camera 21 are line scan cameras, bottom faces of two battery cells 40 can be inspected at the same time (that is, acquired images include the bottom faces of the two battery cells 40).

In the above solution, the field of view of the camera corresponding to a bottom face of some battery cells 40 is within a size range of 120 mm to 305 mm. Therefore, when the first surface 41 is the bottom face of the battery cell 40, the first camera 11 and the second camera 21 having the field of view L1, which satisfies 120 mm ≤ L1 ≤ 305 mm, may be used to meet the compatibility range of the battery cells 40, thereby improving the versatility of the appearance inspection device.

According to some embodiments of the present application, as shown in FIG. 8, when the first surface 41 is a side face of the battery cell 40, the first camera 11 and the second camera 21 have a field of view L2, which satisfies 70 mm ≤ L2 ≤ 120 mm.

Referring to FIG. 8, FIG. 8 shows the field of view L2 of the first camera 11 and the second camera 21, and L2 may correspond to a length of the side face. FIG. 8 also shows a conveying direction d (the conveying direction d may be a width direction of the side face) of battery cells 40. When the field of view L2 of the first camera 11 and the second camera 21 is 70 mm to 120 mm, the current compatibility range of the side face of the battery cells 40 can be met, and when the first camera 11 and the second camera 21 are line scan cameras, side faces of two battery cells 40 can be inspected at the same time (that is, acquired images include the side faces of the two battery cells 40).

In the above solution, the field of view of the camera corresponding to a side face of some battery cells 40 is within a size range of 70 mm to 120 mm. Therefore, when the first surface 41 is the side face of the battery cell 40, the first camera 11 and the second camera 21 having the field of view L2, which satisfies 70 mm ≤ L2 ≤ 120 mm, may be used to meet the compatibility range of the battery cells 40, thereby improving the versatility of the appearance inspection device.

According to some embodiments of the present application, the appearance inspection device further comprises a third camera assembly and a fourth camera assembly (not shown in the figures). The third camera assembly comprises a third camera and a third light source. The third light source is configured to provide illumination to the third camera, and the third camera is configured to acquire images of a second surface of the battery cell 40 when the second surface is covered by an insulating layer. The fourth camera assembly comprises a fourth camera and a fourth light source. The fourth light source is configured to provide illumination to the fourth camera, and the fourth camera is configured to acquire images of the second surface when at least a partial region of the second surface is not covered by the insulating layer.

In some embodiments, the appearance inspection device may comprise the first camera assembly 10 and the second camera assembly 20, as well as the third camera assembly and the fourth camera assembly. In some embodiments, the first camera assembly 10 and the second camera assembly 20 are used as a kit to inspect the first surface 41 of the battery cell 40. The third camera assembly and the fourth camera assembly are used as a kit to inspect the second surface of the battery cell 40.

The second surface of the battery cell 40 may be a side face, a large face, a top face or a bottom face of the battery cell 40, and the second surface may be a surface different from the first surface 41, or may be a surface the same as the first surface 41. When the first surface 41 and the second surface are the same surface, the first camera assembly 10 and the second camera assembly 20, as well as the third camera assembly and the fourth camera assembly can perform redundant inspections, thereby improving the accuracy of appearance inspection. When the first surface 41 and the second surface are not the same surface, different surfaces of the battery cell 40 can be efficiently inspected.

The third camera assembly may have the same structure as the first camera assembly 10, and the fourth camera assembly may have the same structure as the second camera assembly 20. For their specific structures, reference may be made to the above, and details will not be described herein.

In the above solution, the third camera assembly and the fourth camera assembly are both provided such that when the production line conveys a battery cell 40 having a second surface covered by an insulating layer (a battery cell 40 having a fully-coated second surface), the third camera assembly is used to effectively inspect appearance defects of the second surface of the battery cell 40; and when the production line conveys a battery cell 40 having at least a partial region of a second surface not covered by an insulating layer (a battery cell 40 having a windowed second surface), the fourth camera assembly is used implement effective appearance defect inspection on the second surface, in order to overcome the defect that the third camera assembly cannot image defects such as burrs and pits due to the light reflection of the aluminum housing. Therefore, operating states of the third camera assembly and the fourth camera assembly are switched to respectively inspect different types of battery cells 40 and implement type switching in the production line, thereby improving the versatility of the appearance inspection device and the efficiency of appearance inspection of the battery cells 40 and therefore the battery manufacturing efficiency.

According to some embodiments of the present application, one of the first surface 41 and the second surface is a side face of the battery cell 40, and the other is a bottom face of the battery cell 40.

In some embodiments, when the first surface 41 is a bottom face of the battery cell, the second surface is a side face of the battery cell. When the first surface 41 is a side face of the battery cell, the second surface is a bottom face of the battery cell.

In the above solution, the appearance inspection device comprises the first camera assembly 10, the second camera assembly 20, the third camera assembly, and the fourth camera assembly, such that the appearance of the bottom face and the side face of the battery cell 40 can be inspected at the same time, so as to adapt to different cases that the bottom face is fully-coated or windowed and the side face is fully-coated or windowed, thereby improving the versatility of the appearance inspection device and the efficiency of appearance inspection of the battery cell 40.

According to some embodiments of the present application, the present application further provides an apparatus for manufacturing a battery cell 40, the apparatus comprising an appearance inspection device described above.

In some embodiments, the apparatus for manufacturing a battery cell 40 may further comprise a conveying mechanism that can convey battery cells 40, such as a belt conveying mechanism or a manipulator that can move.

In some embodiments, the appearance inspection device in the apparatus for manufacturing a battery cell 40 comprises the first camera assembly 10 and the second camera assembly 20, as well as the third camera assembly and the fourth camera assembly. The first camera assembly 10 and the second camera assembly 20 are used as a kit to inspect the bottom face of the battery cell 40. The third camera assembly and the fourth camera assembly are used as a kit to inspect the side face of the battery cell 40.

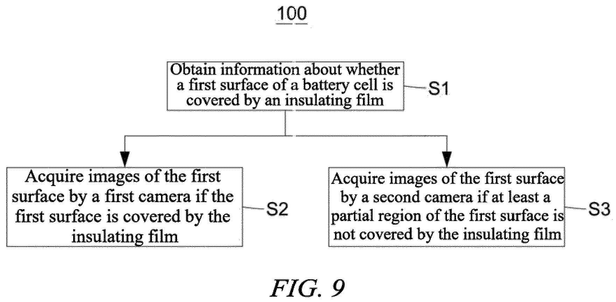

According to the present application, an appearance inspection method is further provided. Referring to FIG. 9, FIG. 9 is a flowchart of an appearance inspection method 100.

The appearance inspection method 100 comprises the following steps.

In step S1, information about whether a first surface 41 of a battery cell 40 is covered by an insulating layer is obtained.

In step S2, images of the first surface 41 are acquired by a first camera 11 if the first surface 41 is covered by the insulating layer.

In step S3, images of the first surface 41 are acquired by a second camera 21 if at least a partial region of the first surface 41 is not covered by the insulating layer.

In step S1, the information about whether a first surface 41 is covered by an insulating layer may comprise the following cases: the first surface 41 is covered by the insulating layer; and at least a partial region of the first surface 41 is not covered by the insulating layer.

In the above solution, by switching operating states of the first camera 11 and the second camera 21, the appearance of first surfaces 41 of battery cells 40 having the first surfaces 41 covered by insulating layers in different manner can be efficiently inspected, thereby ensuring the efficiency of appearance inspection of the battery cells 40.

According to some embodiments of the present application, in step S3, acquiring images of the first surface 41 by a second camera 21 if at least a partial region of the first surface 41 is not covered by the insulating layer comprises:
acquiring images of the first surface 41 jointly by the first camera 11 and the second camera 21 if at least a partial region of the first surface 41 is not covered by the insulating layer.

In the above solution, the windowed first surface 41 also has a partial coated region. Therefore, the first camera 11 and the second camera 21 cooperatively operate to jointly acquire the images of the first surface 41, which can ensure the effective inspection of the appearance of the coated region and the windowed region of the first surface 41 and the efficiency of the appearance inspection of the battery cell 40.

According to an example outside of the scope of the present application, referring to FIGS. 1 to 8, there is provided an appearance inspection device for inspecting a side face and a bottom face of a battery cell 40. The appearance inspection device comprises a first camera assembly 10 and a second camera assembly 20 that are used as a kit, as well as a third camera assembly and a fourth camera assembly that are used as a kit. The first camera assembly 10 and the second camera assembly 20 are configured to inspect a first surface 41 of the battery cell 40, and the third camera assembly and the fourth camera assembly are configured to inspect a second surface of the battery cell 40. One of the first surface 41 and the second surface is a side face of the battery cell 40, and the other is a bottom face of the battery cell 40. The structures of the first camera assembly 10 and the third camera assembly are roughly the same, and the structures of the second camera assembly 20 and the fourth camera assembly are roughly the same. In some embodiments of the present application, the first camera assembly 10 and the second camera assembly 20 are described.

The first camera assembly 10 comprises a first camera 11 and a first light source 12. The first light source 12 is configured to provide illumination to the first camera 11, and the first camera 11 is a 2D line scan camera and is configured to acquire images of the first surface 41 of the battery cell 40 when the first surface 41 is covered by an insulating layer. The second camera assembly 20 comprises a second camera 21 and a second light source 22. The second light source 22 is configured to provide illumination to the second camera 21, and the second camera 21 is a 2.5D line scan camera and is configured to acquire images of the first surface 41 when at least a partial region of the first surface 41 is not covered by the insulating layer. When the first surface 41 is a bottom face of the battery cell 40, the first camera 11 and the second camera 21 have a field of view L1, which satisfies 120 mm ≤ L1 ≤ 305 mm. When the first surface 41 is a side face of the battery cell 40, the first camera 11 and the second camera 21 have a field of view L2, which satisfies 70 mm ≤ L2 ≤ 120 mm.

Referring to FIGS. 2 and 3 or FIGS. 6 and 7, the appearance inspection device further comprises a first adjusting mechanism 30, a second adjusting mechanism 31, a third adjusting mechanism 32, a fourth adjusting mechanism 33, and a fixing support 34. The first adjusting mechanism 30, the second adjusting mechanism 31, the third adjusting mechanism 32 and the fourth adjusting mechanism 33 may be all arranged on the fixing support 34. The first adjusting mechanism 30 is connected to the first camera 11, and is configured to adjust a distance between the first camera 11 and the first surface 41, such that the first camera 11 moves closer to or away from the first surface 41. The second adjusting mechanism 31 is connected to the first light source 12, and is configured to adjust a distance between the first light source 12 and the first surface 41, so as to provide illumination in different ranges to the first camera 11, ensuring an imaging effect of the first camera 11. The third adjusting mechanism 32 is connected to the second camera 21, and is configured to adjust an angle of the second camera 21. The fourth adjusting mechanism 33 is connected to the second light source 22, and is configured to adjust an angle of the second light source 22. Through the adjustment by the third adjusting mechanism 32 and the fourth adjusting mechanism 33, an angle α1 between a shooting line of sight of the second camera 21 and a normal of the first surface 41 is equal to an angle α2 between illumination rays of the second light source 22 and the normal of the first surface 41, and it is ensured that an intersection of the shooting line of sight of the second camera 21 and the illumination rays of the second light source 22 is located on the first surface 41. When the first surface 41 is the bottom face of the battery cell 40, the appearance inspection device may further comprise a fifth adjusting mechanism 35. The fifth adjusting mechanism 35 is connected to the fixing support 34, and is configured to adjust a distance between the first surface 41 and each of the first camera assembly 10 and the second camera assembly 20.

If the first surface 41 is the bottom face of the battery cell 40 and the second surface is the side face of the battery cell 40, a working flow of the appearance inspection device may be as follows:
when the battery cell 40 is a fully-coated battery cell, the first camera assembly 10 and the third camera assembly are used, that is, the 2D camera for inspecting the bottom face and the light source corresponding thereto acquire images of the bottom face, and the 2D camera for inspecting the side face and the light source corresponding thereto acquire images of the side face; or
when the battery cell 40 is a battery cell having a windowed side face, the first camera assembly 10 and the fourth camera assembly are used, that is, the 2D camera for inspecting the bottom face and the light source corresponding thereto acquire images of the bottom face, and the 2.5D camera for inspecting the side face and the light source corresponding thereto acquire images of the side face; or the first camera assembly 10, the third camera assembly and the fourth camera assembly are used, that is, the 2D camera for inspecting the bottom face and the light source corresponding thereto acquire images of the bottom face, and the 2D camera for inspecting the side face and the light source corresponding thereto as well as the 2.5D camera and the light source corresponding thereto jointly acquire images of the side face; or
when the battery cell 40 is a battery cell having a windowed bottom face, the second camera assembly 20 and the third camera assembly are used, that is, the 2.5D camera for inspecting the bottom face and the light source corresponding thereto acquire images of the bottom face, and the 2D camera for inspecting the side face and the light source corresponding thereto acquire images of the side face; or the first camera assembly 10 and the second camera assembly 20 as well as the third camera assembly are used, that is, the 2D camera for inspecting the bottom face and the light source corresponding thereto as well as the 2.5D camera and the light source corresponding thereto jointly acquire images of the bottom face, and the 2D camera for inspecting the side face acquires images of the side face.

## Claims

1. A method of using an appearance inspection device to inspect a battery cell (40), wherein the appearance inspection device comprises:
a first camera assembly (10) comprising a first camera (11) and a first light source (12), and a second camera assembly (20) comprising a second camera (21) and a second light source (22), and wherein the battery cell (4) comprises a first surface (41);
the method comprising the steps of:
obtaining information about whether the first surface (41) of the battery cell (40) is covered by an insulating layer;
providing illumination to the first camera (11) using the first light source (12),
acquiring images, using the first camera (11), of the first surface (41) of the battery cell (40) when the first surface (41) is covered by an insulating layer; and
providing illumination to the second camera (21) using the second light source (22), and acquiring images, using the second camera (21), of the first surface (41) when at least a partial region of the first surface (41) is not covered by the insulating layer.

2. The method according to claim 1, wherein the first camera (11) and the second camera (21) are both line scan cameras.

3. The method according to claim 1, wherein the appearance inspection device further comprises a first adjusting mechanism (30) connected to the first camera (11) and configured to adjust a distance between the first camera (11) and the first surface (41).

4. The method according to claim 1, wherein
the appearance inspection device further comprises a second adjusting mechanism (31) connected to the first light source (12) and configured to adjust a distance between the first light source (12) and the first surface (41).

5. The method according to claim 1, wherein
the appearance inspection device further comprises a third adjusting mechanism (32) connected to the second camera (21) and configured to adjust an angle of the second camera (21).

6. The method according to claim 1, wherein
the appearance inspection device further comprises a fourth adjusting mechanism (33) connected to the second light source (22) and configured to adjust an angle of the second light source (22).

7. The method according to claim 1, wherein
the appearance inspection device further comprises:
a fixing support (34) on which the first camera assembly (10) and the second camera assembly (20) are arranged.

8. The method according to claim 7, wherein
the appearance inspection device further comprises a fifth adjusting mechanism (35) connected to the fixing support (34) and configured to adjust a distance between the fixing support (34) and the first surface (41).

9. The method according to claim 1, wherein
when the first surface (41) is a bottom face of the battery cell (40), the first camera (11) and the second camera (21) have a field of view L1, which satisfies 120 mm ≤ L1 ≤ 305 mm.

10. The method according to claim 1, wherein
when the first surface (41) is a side face of the battery cell (40), the first camera (11) and the second camera (21) have a field of view L2, which satisfies 70 mm ≤ L2 ≤ 120 mm.

11. The method according to any one of claims 1 to 10, further comprising:
a third camera assembly comprising a third camera and a third light source, the third light source being configured to provide illumination to the third camera, and the third camera being configured to acquire images of a second surface of the battery cell (40) when the second surface is covered by an insulating layer; and
a fourth camera assembly comprising a fourth camera and a fourth light source, the fourth light source being configured to provide illumination to the fourth camera, and the fourth camera being configured to acquire images of the second surface when at least a partial region of the second surface is not covered by the insulating layer.

12. The method according to claim 11, wherein
one of the first surface (41) and the second surface is a side face of the battery cell (40), and the other is a bottom face of the battery cell (40).

## Patentansprüche

1. Verfahren zur Verwendung einer Aussehensinspektionsvorrichtung zum Inspizieren einer Batteriezelle (40), wobei die Aussehensinspektionsvorrichtung Folgendes umfasst:
eine erste Kameraanordnung (10), umfassend eine erste Kamera (11) und eine erste Lichtquelle (12), und eine zweite Kameraanordnung (20), umfassend eine zweite Kamera (21) und eine zweite Lichtquelle (22), und wobei die Batteriezelle (4) eine erste Oberfläche (41) umfasst;
wobei das Verfahren folgende Schritte umfasst:
Beschaffen von Informationen darüber, ob die erste Oberfläche (41) der Batteriezelle (40) von einer Isolierschicht bedeckt ist;
Bereitstellen von Beleuchtung für die erste Kamera (11) unter Verwendung der ersten Lichtquelle (12),
Erfassen von Bildern der ersten Oberfläche (41) der Batteriezelle (40) unter Verwendung der ersten Kamera (11), wenn die erste Oberfläche (41) von einer Isolierschicht bedeckt ist; und
Bereitstellen von Beleuchtung für die zweite Kamera (21) unter Verwendung der zweiten Lichtquelle (22) und Erfassen von Bilden der ersten Oberfläche (41) unter Verwendung der zweiten Kamera (21), wenn mindestens ein Teilbereich der ersten Oberfläche (41) nicht von der Isolierschicht bedeckt ist.

2. Verfahren nach Anspruch 1, wobei die erste Kamera (11) und die zweite Kamera (21) beide Zeilenkameras sind.

3. Verfahren nach Anspruch 1, wobei die Aussehensinspektionsvorrichtung ferner einen ersten Einstellmechanismus (30) umfasst, der mit der ersten Kamera (11) verbunden ist und dazu konfiguriert ist, eine Entfernung zwischen der ersten Kamera (11) und der ersten Oberfläche (41) einzustellen.

4. Verfahren nach Anspruch 1, wobei:
die Aussehensinspektionsvorrichtung ferner einen zweiten Einstellmechanismus (31) umfasst, der mit der ersten Lichtquelle (12) verbunden ist und dazu konfiguriert ist, eine Entfernung zwischen der ersten Lichtquelle (12) und der ersten Oberfläche (41) einzustellen.

5. Verfahren nach Anspruch 1, wobei:
die Aussehensinspektionsvorrichtung ferner einen dritten Einstellmechanismus (32) umfasst, der mit der zweiten Kamera (21) verbunden ist und dazu konfiguriert ist, einen Winkel der zweiten Kamera (21) einzustellen.

6. Verfahren nach Anspruch 1, wobei:
die Aussehensinspektionsvorrichtung ferner einen vierten Einstellmechanismus (33) umfasst, der mit der zweiten Lichtquelle (22) verbunden ist und dazu konfiguriert ist, einen Winkel der zweiten Lichtquelle (22) einzustellen.

7. Verfahren nach Anspruch 1, wobei:
die Aussehensinspektionsvorrichtung ferner Folgendes umfasst:
eine Fixierungshalterung (34), auf der die erste Kameraanordnung (10) und die zweite Kameraanordnung (20) angeordnet sind.

8. Verfahren nach Anspruch 7, wobei:
die Aussehensinspektionsvorrichtung ferner einen fünften Einstellmechanismus (35) umfasst, der mit der Fixierungshalterung (34) verbunden ist und dazu konfiguriert ist, eine Entfernung zwischen der Fixierungshalterung (34) und der ersten Oberfläche (41) einzustellen.

9. Verfahren nach Anspruch 1, wobei:
wenn die erste Oberfläche (41) eine Bodenfläche der Batteriezelle (40) ist, die erste Kamera (11) und die zweite Kamera (21) ein Sichtfeld L1 aufweisen, für das 120 mm ≤ L1 ≤ 305 mm gilt.

10. Verfahren nach Anspruch 1, wobei:
wenn die erste Oberfläche (41) eine Seitenfläche der Batteriezelle (40) ist, die erste Kamera (11) und die zweite Kamera (21) ein Sichtfeld L2 aufweisen, für das 70 mm ≤ L2 ≤ 120 mm gilt.

11. Verfahren nach einem der Ansprüche 1 bis 10, ferner umfassend:
eine dritte Kameraanordnung, umfassend eine dritte Kamera und eine dritte Lichtquelle, wobei die dritte Lichtquelle dazu konfiguriert ist, Beleuchtung für die dritte Kamera bereitzustellen, und die dritte Kamera dazu konfiguriert ist, Bilder einer zweiten Oberfläche der Batteriezelle (40) zu erfassen, wenn die zweite Oberfläche von einer Isolierschicht bedeckt ist; und
eine vierte Kameraanordnung, umfassend eine vierte Kamera und eine vierte Lichtquelle, wobei die vierte Lichtquelle dazu konfiguriert ist, Beleuchtung für die vierte Kamera bereitzustellen, und die vierte Kamera dazu konfiguriert ist, Bilder der zweiten Oberfläche zu erfassen, wenn mindestens ein Teilbereich der zweiten Oberfläche nicht von der Isolierschicht bedeckt ist.

12. Verfahren nach Anspruch 11, wobei:
eine von der ersten Oberfläche (41) und der zweiten Oberfläche eine Seitenfläche der Batteriezelle (40) ist und die andere eine Bodenfläche der Batteriezelle (40) ist.

## Revendications

1. Procédé d'utilisation d'un dispositif d'inspection d'aspect pour inspecter un élément de batterie (40), dans lequel le dispositif d'inspection d'aspect comprend :
un premier ensemble caméra (10) comprenant une première caméra (11) et une première source de lumière (12), et un deuxième ensemble caméra (20) comprenant une deuxième caméra (21) et une deuxième source de lumière (22), et dans lequel l'élément de batterie (4) comprend une première surface (41) ;
le procédé comprenant les étapes suivantes :
l'obtention d'informations consistant à savoir si oui ou non la première surface (41) de l'élément de batterie (40) est recouverte d'une couche isolante ;
la fourniture d'un éclairage à la première caméra (11) au moyen de la première source de lumière (12),
l'acquisition d'images, au moyen de la première caméra (11), de la première surface (41) de l'élément de batterie (40) lorsque la première surface (41) est recouverte d'une couche isolante ; et
la fourniture d'un éclairage à la deuxième caméra (21) au moyen de la deuxième source de lumière (22), et l'acquisition d'images, au moyen de la deuxième caméra (21), de la première surface (41) lorsqu'au moins une région partielle de la première surface (41) n'est pas recouverte de la couche isolante.

2. Procédé selon la revendication 1, dans lequel la première caméra (11) et la deuxième caméra (21) sont toutes deux des caméras à balayage linéaire.

3. Procédé selon la revendication 1, dans lequel le dispositif d'inspection d'aspect comprend en outre un premier mécanisme d'ajustement (30) connecté à la première caméra (11) et configuré pour ajuster une distance entre la première caméra (11) et la première surface (41).

4. Procédé selon la revendication 1, dans lequel
le dispositif d'inspection d'aspect comprend en outre un deuxième mécanisme d'ajustement (31) connecté à la première source de lumière (12) et configuré pour ajuster une distance entre la première source de lumière (12) et la première surface (41).

5. Procédé selon la revendication 1, dans lequel
le dispositif d'inspection d'aspect comprend en outre un troisième mécanisme d'ajustement (32) connecté à la deuxième caméra (21) et configuré pour ajuster un angle de la deuxième caméra (21).

6. Procédé selon la revendication 1, dans lequel
le dispositif d'inspection d'aspect comprend en outre un quatrième mécanisme d'ajustement (33) connecté à la deuxième source de lumière (22) et configuré pour ajuster un angle de la deuxième source de lumière (22).

7. Procédé selon la revendication 1, dans lequel
le dispositif d'inspection d'aspect comprend en outre :
un support de fixation (34) sur lequel le premier ensemble caméra (10) et le deuxième ensemble caméra (20) sont agencés.

8. Procédé selon la revendication 7, dans lequel
le dispositif d'inspection d'aspect comprend en outre un cinquième mécanisme d'ajustement (35) connecté au support de fixation (34) et configuré pour ajuster une distance entre le support de fixation (34) et la première surface (41).

9. Procédé selon la revendication 1, dans lequel
lorsque la première surface (41) est une face inférieure de l'élément de batterie (40), la première caméra (11) et la deuxième caméra (21) présentent un champ de vision L1, qui satisfait 120 mm ≤ L1 ≤ 305 mm.

10. Procédé selon la revendication 1, dans lequel
lorsque la première surface (41) est une face latérale de l'élément de batterie (40), la première caméra (11) et la deuxième caméra (21) présentent un champ de vision L2, qui satisfait 70 mm ≤ L2 ≤ 120 mm.

11. Procédé selon l'une quelconque des revendications 1 à 10, comprenant en outre :
un troisième ensemble caméra comprenant une troisième caméra et une troisième source de lumière, la troisième source de lumière étant configurée pour fournir un éclairage à la troisième caméra, et la troisième caméra étant configurée pour acquérir des images d'une seconde surface de l'élément de batterie (40) lorsque la seconde surface est recouverte d'une couche isolante ; et
un quatrième ensemble caméra comprenant une quatrième caméra et une quatrième source de lumière, la quatrième source de lumière étant configurée pour fournir un éclairage à la quatrième caméra, et la quatrième caméra étant configurée pour acquérir des images de la seconde surface lorsqu'au moins une région partielle de la seconde surface n'est pas recouverte de la couche isolante.

12. Procédé selon la revendication 11, dans lequel
l'une de la première surface (41) et de la seconde surface est une face latérale de l'élément de batterie (40), et l'autre est une face inférieure de l'élément de batterie (40).
